# EUROPEAN PATENT SPECIFICATION

(11) **EP 3 617 014 B1**
(45) Date of publication and mention of the grant of the patent: **02.03.2022**
(21) Application number: 17913937.3
(22) Date of filing: 18.12.2017
(51) Int. Cl.: B60T 13/24, B60T 13/66, B60T 13/68, B60T 17/22

(54) **LOCOMOTIVE AND DUAL MODE BRAKE CONTROL SYSTEM THEREOF**
LOKOMOTIVE UND DOPPELMODUS-BREMSSTEUERUNGSSYSTEM DAFÜR
LOCOMOTIVE ET SYSTÈME DE COMMANDE DE FREIN À DOUBLE MODE ASSOCIÉ

(30) Priority: 13.06.2017 CN 201710442868
(43) Date of publication of application: 04.03.2020
(73) Proprietor: CRRC Zhuzhou Locomotive Co., Ltd., Zhuzhou, Hunan 412001 (CN)
(72) Inventor: FANG, Changzheng, Zhuzhou Hunan 412001 (CN); HUANG, Jinhu, Zhuzhou Hunan 412001 (CN); MAO, Jinhu, Zhuzhou Hunan 412001 (CN); SU, Li, Zhuzhou Hunan 412001 (CN); GUO, Yingying, Zhuzhou Hunan 412001 (CN); XIE, Shichuan, Zhuzhou Hunan 412001 (CN)
(74) Representative: Behr, Wolfgang
(86) International application number: PCT/CN2017/116861
(87) International publication number: WO 2018/227916

(56) References cited:
- CN-A- 103 434 504
- CN-A- 105 035 053
- CN-A- 105 197 000
- CN-A- 107 264 500
- CN-U- 204 055 819
- JP-A- 2008 189 130
- RU-C1- 2 074 827
- US-A- 4 904 027
- US-A- 5 192 118

## Description

### FIELD

The present invention relates to the technical field of locomotives, and in particular, to a system for controlling dual-mode brake for a locomotive. The present invention further relates to a locomotive including the above system. Documents US4904027A and US5192118A show examples of locomotive braking systems provided with a backup facility.

### BACKGROUND

With development of rail transport in China, more and more rail locomotives are widely used.

A locomotive is a self-propelled vehicle, which pulls or pushes a railway vehicle to travel and does not have a payload. The locomotive drives a driving wheel (drive wheel) via a transmission of the locomotive, by using power generated by a steam engine, a diesel engine, a traction motor, or another power machine. A driving force, i.e. traction of the locomotive, is generated from an adhesion force between the driving wheel and the rail. The traction generated by the locomotive overcomes resistance on a train, and is capable to drive a train whose weight is over 10 or 20 times more than that of the locomotive. The locomotive or the train when running on a rail should be capable to decelerate or stop at any time, so braking devices are mounted on both the locomotive and the train. Further, a retarding effect generated by a reverse action of a power unit, a transmission, or the traction motor, of the locomotive may be used to assist operation of the braking devices.

When a railway locomotive runs on a line, a failure of a breaking system would generally result in an immobile locomotive that occupies a main line. Normal operation of not only a current train but also trains on the whole line is affected. Therefore, it is necessary to provide a backup brake for the locomotive.

At present, the backup brake on the locomotive is mainly a mechanically controlled backup air brake. It is necessary to mount an independent set of backup brake controllers, so that the backup air brake is capable to be independent from the brake system of the locomotive. In a case that the brake system of the locomotive cannot operate normally, the backup air brake can be activated for emergency braking. The independent backup brake controller not only occupies a limited space in an operating area of a driver cab, but also brings difficulty in driver's operation. Further, it is necessary to lead out a control line from the brake to the operating area in a backup brake manner that is mechanically controlled, thereby increasing arrangement difficulties and malfunction risks.

Therefore, an urgent technical problem to be solved by those skilled in the art is how to prevent a backup brake controller of the locomotive from occupying an extra space and reduce wiring complexity of a backup brake system.

### SUMMARY

An object of the present disclosure is to provide a system for controlling dual-mode brake for a locomotive, which can avoid a backup brake controller for the locomotive occupying extra space and reduce wiring complexity of a backup brake system. Another object of the present disclosure is to provide a locomotive including the above system for controlling dual-mode brake.

In order to solve the above technical problem, a system for controlling dual-mode brake for a locomotive is provided according to an embodiment of the present disclosure, including: a relay valve in communication with a train pipe, and an pressure-equalizing device, of which one end is in communication with a main pipe and another end is in communication with an inlet port of the relay valve, where the system for controlling dual-mode brake further includes: a mode-switching valve connected between the relay valve and the pressure-equalizing device, a backup pressure regulating valve in communication with the main pipe, an electro-interlock cut-out cock in communication with an outlet port of the backup pressure regulating valve, and a brake controller;
where the mode-switching valve is provided with a first inlet port, a second inlet port and an outlet port, the first inlet port of the mode-switching valve is in communication with an outlet port of the pressure-equalizing device, the second inlet port of the mode-switching valve is in communication with an outlet port of the electro-interlock cut-out cock, and the outlet port of the mode-switching valve is in communication with an equalization inlet port of the relay valve; and
where the inlet port of the electro-interlock cut-out cock and the outlet port of the electro-interlock cut-out cock are in communication with each other in case of the electro-interlock cut-out cock being triggered, and are cut out from each other in case of the electro-interlock cut-out cock being not triggered; the brake controller is configured to enable the outlet port of the mode-switching valve to be in communication with the second inlet port of the mode-switching valve in case of the electro-interlock cut-out cock being triggered, and configured to enable the outlet port of the mode-switching valve to be in communication with the first inlet port of the mode-switching valve in case of the electro-interlock cut-out cock being not triggered.

Preferably, the system for controlling dual-mode brake further includes a distributing valve, a pressure comparison valve, an application valve, and a first on-off solenoid valve, a first stabilizing reservoir, a second on-off solenoid valve and a second stabilizing reservoir;
where an inlet port of the distributing valve is in communication with the train pipe, an outlet port of the distributing valve is in communication with a first inlet port of the pressure comparison valve, an outlet port of the pressure comparison valve is in communication with an inlet port of the application valve, and an outlet port of the application valve is in communication with a brake cylinder pipe;
where an inlet port of the first on-off solenoid valve is in communication with the main pipe, and an outlet port of the first on-off solenoid valve and an air port of the first stabilizing reservoir are both in communication with a second inlet port of the pressure comparison valve;
where an inlet port of the second on-off solenoid valve is in communication with the outlet port of the backup pressure regulating valve, and an outlet port of the second on-off solenoid valve and an air port of the second stabilizing reservoir are both in communication with an inlet port of the electro-interlock cut-out cock;
where the first on-off solenoid valve and the second on-off solenoid valve are both signally connected to the brake controller, and the brake controller is configured to control an on or off state of the second on-off solenoid valve in case of the electro-interlock cut-out cock being triggered, and configured to control an on or off state of the first on-off solenoid valve in case of the electro-interlock cut-out cock being not triggered.

Preferably, the system for controlling dual-mode brake further includes: a first pressure-releasing solenoid valve in communication with the outlet port of the first on-off solenoid valve, and a second pressure-releasing solenoid valve in communication with the outlet port of the second on-off solenoid valve; where an outlet port of the first pressure-releasing solenoid valve and an outlet port of the second pressure-releasing solenoid valve are both in communication with outside air, the first pressure-releasing solenoid valve and the second pressure-releasing solenoid valve are both signally connected to the brake controller, and the brake controller is configured to control an on or off state of the second pressure-releasing solenoid valve in case of the electro-interlock cut-out cock being triggered, and configured to control an on or off state of the first pressure-releasing solenoid valve in case of the electro-interlock cut-out cock being not triggered.

Preferably, the system for controlling dual-mode brake further includes an overcharge on-off solenoid valve in communication with the main pipe, an overcharge reservoir and an overcharge pressure-releasing solenoid valve that are in communication with an outlet port of the overcharge on-off solenoid valve, and an overcharge switch configured to control an on or off state of the overcharge on-off solenoid valve and an on or off state of the overcharge pressure-releasing solenoid valve, where:
an air port of the overcharge reservoir is in communication with an overcharge inlet port of the relay valve, and an outlet port of the overcharge pressure-releasing solenoid valve is in communication with the outside air; the inlet port of the overcharge on-off solenoid valve and the outlet port of the overcharge on-off solenoid valve are in communication with each other, and the inlet port of the overcharge pressure-releasing solenoid valve and the outlet port of the overcharge pressure-releasing solenoid valve are cut out from each other, in case of the overcharge switch being turned on; and the inlet port of the overcharge on-off solenoid valve and the outlet port of the overcharge on-off solenoid valve are cut off from each other, and the inlet port of the overcharge pressure-releasing solenoid valve and the outlet port of the overcharge pressure-releasing solenoid valve are in communication with each other, in case of the overcharge switch being turned off.

Preferably, the system for controlling dual-mode brake further includes a mode control unit and a backup intermediate relay that are signally connected to the electro-interlock cut-out cock, where the mode control unit is configured to control communication among the inlet ports and the outlet port of the mode-switching valve, and the backup intermediate relay is configured to enable the brake controller to select to control the on or off states of the first on-off solenoid valve and the first pressure-releasing solenoid valve, or control the on or off states of the second on-off solenoid valve and the second pressure-releasing solenoid valve;
where the mode control unit is configured to enable the outlet port of the mode-switching valve to be in communication with the second inlet port of the mode-switching valve in case of the electro-interlock cut-out cock being triggered, and enable the outlet port of the mode-switching valve to be in communication with the first inlet port of the mode-switching valve in case of the electro-interlock cut-out cock being not triggered; and
where the backup intermediate relay is configured to enable the brake controller to control the on or off states of the first on-off solenoid valve and the first pressure-releasing solenoid valve in case of the electro-interlock cut-out cock being triggered, and enable the brake controller to control the on or off states of the second on-off solenoid valve and the second pressure-releasing solenoid valve in case of the electro-interlock cut-out cock being not triggered.

Preferably, the brake controller is provided with a first control contact for controlling the on or off state of the first on-off solenoid valve or the on or off state of the second on-off solenoid valve, and a second control contact for controlling the on or off state of the first pressure-releasing solenoid valve or the on or off state of the second pressure-releasing solenoid valve, where the first control contact and the second control contact are independent from each other in whether being triggered or not.

A locomotive is further provided according to an embodiment of the present disclosure, including any one of the aforementioned system for controlling dual-mode brake.

The system for controlling dual-mode brake for the locomotive according to the present disclosure mainly includes a relay valve, an pressure-equalizing device, a mode-switching valve, a backup pressure regulating valve, an electro-interlock cut-out cock, and a brake controller. The outlet port of the relay valve is in communication with the train pipe, the one end of the pressure-equalizing device is in communication with the main pipe, and the another end of the pressure-equalizing device is in communication with the inlet port of the relay valve. The mode-switching valve is connected between the relay valve and the pressure-equalizing device, the backup pressure regulating valve is in communication with the main pipe, and the electro-interlock cut-out cock is in communication with the outlet port of the backup pressure regulating valve. The mode-switching valve is provided with the first inlet port, the second inlet port and the outlet port, the first inlet port thereof is in communication with the outlet port of the pressure-equalizing device, the second inlet port thereof is in communication with the outlet port of the electro-interlock cut-out cock, and the outlet port thereof is in communication with the equalization inlet port of the relay valve. As such, the mode-switching valve has two airflow modes, that is, the first inlet port is in communication with the outlet port, or the second inlet port is in communication with the outlet port, and switching between the modes is controlled by a state of the electro-interlock cut-out cock. The inlet port of the electro-interlock cut-out cock is isolated from the outlet port of the electro-interlock cut-out cock. The inlet port of the electro-interlock cut-out cock and the outlet port of the electro-interlock cut-out cock are in communication with each other in case of the electro-interlock cut-out cock being triggered, and are cut out form each other in case of the electro-interlock cut-out cock being not triggered. The brake controller is configured to enable the outlet port of the mode-switching valve to be in communication with the second inlet port of the mode-switching valve in case of the electro-interlock cut-out cock being triggered, and configured to enable the outlet port of the mode-switching valve to be in communication with the first inlet port of the mode-switching valve in case of the electro-interlock cut-out cock being not triggered. Thus, a pressure in the main pipe is outputted to the train pipe via the pressure-equalizing device, in a case that the first inlet port of the mode-switching valve is in communication with the outlet port of the mode-switching valve, and such case is a solo brake mode. The pressure in the main pipe is outputted to the train pipe via the backup pressure regulating valve, in a case that the second inlet port of the mode-switching valve is in communication with the outlet port of the mode-switching valve, and such case is a backup brake mode. Moreover, the brake controller is capable to control a brake mode of the mode-switching valve through state conversion of the electro-interlock cut-out cock, so that the brake mode can be switched at will between the solo brake mode and the backup brake mode. Compared with the conventional technology, control of the solo brake mode and the backup brake mode can be achieved by the same brake controller, and it is not necessary to separately provide a backup brake controller or an additional air pipeline for the backup brake mode. Thereby, occupation of an extra space is avoided, and wiring complexity of a brake system is reduced.

### BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic diagram of a pneumatic structure according to an embodiment of the present disclosure; and
Figure 2 is a schematic control diagram of a brake controller according to an embodiment of the present disclosure.

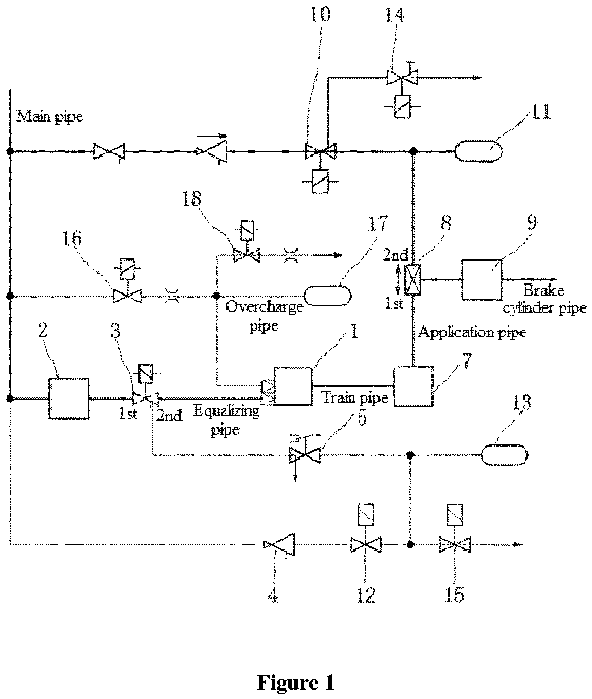

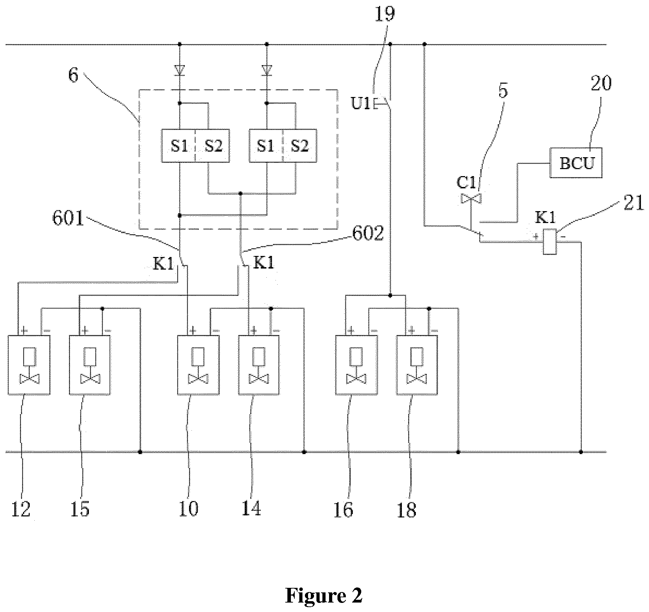

**Reference numerals in Figures 1 and 2:**

| | | | |
|---|---|---|---|
| 1: | relay valve, | 2: | pressure-equalizing device, |
| 3: | mode-switching valve, | 4: | backup pressure regulating valve, |
| 5: | electro-interlock cut-out cock, | 6: | brake controller, |
| 601: | first control contact, | 602: | second control contact, |
| 7: | distributing valve, | 8: | pressure comparison valve, |
| 9: | application valve, | 10: | first on-off solenoid valve, |
| 11: | first stabilizing reservoir, | 12: | second on-off solenoid valve, |
| 13: | second stabilizing reservoir, | 14: | first pressure-releasing solenoid valve, |
| 15: | second pressure-releasing solenoid valve, | | |
| 16: | overcharge on-off solenoid valve, | | |
| 17: | overcharge reservoir, | | |
| 18: | overcharge pressure-releasing solenoid valve, | | |
| 19: | overcharge switch, | 20: | mode control unit, |
| 21: | backup intermediate relay. | | |

### DETAILED DESCRIPTION

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Reference is made to Figure 1, which is a schematic diagram of a pneumatic structure according to an embodiment of the present disclosure.

In embodiments according to the present disclosure, "dual-mode" in the system for controlling dual-mode brake refers to a solo brake mode of a solo brake system and a backup brake mode of a backup brake system. Pneumatic switching between the two modes is mainly determined by a communication state of a mode-switching valve 3.

First introduced is the solo brake system. The solo brake system mainly includes a first on-off solenoid valve 10, a first pressure-releasing solenoid valve 14, a first stabilizing reservoir 11, an pressure-equalizing device 2, a mode-switching valve 3, a relay valve 1, a distributing valve 7, a pressure comparison valve 8, and an application valve 9. Such components form a pneumatic circuit. Functions of the relay valve 1, the distributing valve 7, the pressure comparison valve 8, and the application valve 9 are similar to those in conventional technology, which are not described in detail herein. It should be noted that the pressure comparison valve 8 is configured to output a larger one between a pressure at a first inlet port thereof and a pressure at a second inlet port thereof. Moreover, an equalization inlet port of the relay valve 1 and an outlet port of the mode-switching valve 3 are in communication with each other via an equalizing pipe. An outlet port of the relay valve 1 and an inlet port of the distributing valve 7 are in communication with each other via a train pipe. An outlet port of the valve 7 and a first inlet port of the pressure comparison valve 8 are in communication with each other via an application pipe. The outlet port of the application valve 9 is in communication with a brake cylinder pipe.

An inlet port of the first on-off solenoid valve 10 is in communication with the main pipe, and an outlet port of the first on-off solenoid valve 10 is in communication with the air port of the first stabilizing reservoir 11. An inlet port of the first pressure-releasing solenoid valve 14 is also in communication with the outlet port of the first on-off solenoid valve 10, and an outlet port of the first pressure-releasing solenoid valve 14 is in communication with outside air. The air port of the first stabilizing cylinder 11 is also in communication with the second inlet port of the pressure comparison valve 8. It is appreciated that a cut-out cock and a pressure regulating valve may be provided between the inlet port of the first on-off solenoid valve 10 and the main pipe. As such, air in the main pipe can reach the second inlet port of the pressure comparison valve 8 via the first on-off solenoid valve 10 and the first stabilizing cylinder 11.

Further, an inlet port of the pressure-equalizing device 2 is in communication with the main pipe, an outlet port of the pressure-equalizing device 2 is in communication with a first inlet port of the mode-switching valve 3, and the outlet port of the mode-switching valve 3 is in communication with the equalization inlet port of the relay valve 1. The distributing valve 7, the pressure comparison valve 8, and the application valve 9 are subsequently connected in sequence. As such, the air in the main pipe can reach the first inlet port of the pressure comparison valve 8 via the pressure-equalizing device 2 and the mode-switching valve 3. The pressure comparison valve 8 selects a larger pressure between ones at the first inlet port and at the second inlet port, and outputs the larger pressure to the brake cylinder via the application valve 9. Thereby, it is ensured that there is a large brake pressure in the brake cylinder.

Described as above is an operation mode of the solo brake system, namely, the solo brake mode. In such mode, the outlet port of the mode-switching valve 3 is in communication with the first inlet port of the mode-switching valve 3.

Hereinafter introduced is the backup brake system. The backup brake system mainly includes a backup pressure regulating valve 4, a second on-off solenoid valve 12, a second pressure-releasing solenoid valve 15, a second stabilizing reservoir 13, an electro-interlock cut-out cock 5, and a mode-switching valve 3. It is appreciated that the subsequent relay valve 1, the distributing valve 7, the pressure comparison valve 8, and the application valve 9 are shared with the solo brake system.

An inlet port of the second on-off solenoid valve 12 is in communication with the main pipe, and an outlet port of the second on-off solenoid valve 12 is in communication with an air port of the second stabilizing reservoir 13. An inlet port of the second pressure-releasing solenoid valve 15 is also in communication with the outlet port of the second on-off solenoid valve 12, and an outlet port of the second pressure-releasing solenoid valve 15 is in communication with the outside air. The air port of the second stabilizing reservoir 13 is also in communication with an inlet port of the electro-interlock cut-out cock 5, and an outlet port of the electro-interlock cut-out cock 5 is in communication with a second inlet port of the mode-switching valve 3. In addition, the backup pressure regulating valve 4 is arranged between the second on-off solenoid valve 12 and the main pipe for regulating a pressure. As such, the air in the main pipe reaches the second inlet port of the mode-switching valve 3 via the backup pressure regulating valve 4, the second on-off solenoid valve 12, the second stabilizing reservoir 13, and the electro-interlock cut-out cock 5. Then, the air reaches the first inlet port of the pressure comparison valve 8 still via the relay valve 1 and the distributing valve 7. The second inlet port of the pressure comparison valve 8 keeps in communication with the air port of the first stabilizing reservoir 11. Still, the pressure comparison valve 8 selects a larger pressure between ones at the first inlet port and at the second inlet port, and outputs the larger pressure to the brake cylinder via the application valve 9.

Described as above is an operation mode of the backup brake system, namely, the backup brake mode. In such mode, the outlet port of the mode-switching valve 3 is in communication with the second inlet port of the mode-switching valve 3. Further, the inlet port and outlet port of the electro-interlock cut-out cock 5 are in communication with each other.

It is noted that whether the outlet port of the conversion valve in communication with the first inlet port thereof or the second inlet port thereof is determined by the electro-interlock cut-out cock 5. The electro-interlock cut-out cock 5 is further connected to a brake controller 6 in circuit. A pneumatic communication state between the inlet port and the outlet port of the electro-interlock cut-out cock 5 are determined by a triggering state of the electro-interlock cut-out cock 5.

As shown in Figure 2, which is a schematic control diagram of a brake controller according to an embodiment of the present disclosure..

In a controlling circuit, the electrical interlock cut-out cock 5 may be considered as a single-pole double-throw switch, which is connected to either a mode control unit 20 or a backup intermediate relay 21. A specific connection relationship may be manually controlled by a user. Generally, in a natural state, namely, when a locomotive is under control of the solo brake system, the electro-interlock cut-out cock 5 is connected to the mode control unit 20 in circuit. The electro-interlock cut-out cock 5 is not connected to the backup intermediate relay 21 unless in a state of being triggered, namely, when the locomotive is under control of the backup brake system. The mode control unit 20 is signally connected to the mode-switching valve 3 which is in a pneumatic system. In a case that the mode control unit 20 is connected to the electro-interlock cut-out cock 5, the mode control unit 20 controls the outlet port of the mode-switching valve 3 to be in communication with the first inlet port of the mode-switching valve 3. In a case that the mode control unit 20 is disconnected from the electro-interlocking cut-out cock 5, namely, the electro-interlock cut-out cock 5 is connected to the backup intermediate relay 21, the mode control unit 20 controls the outlet port of the mode-switching valve 3 to be in communication with the second inlet port of the mode-switching valve 3. As such, control on communication states among the inlet ports and outlet port of the mode-switching valve 3 is achieved by controlling the triggering state of the electro-interlock cut-out cock 5. Thereby, switching between the solo brake mode and the backup brake mode is implemented for the locomotive.

Further, the backup intermediate relay 21 is mainly configured to switch a control target of the brake controller 6. Specifically, the first on-off solenoid valve 10 and the first pressure-releasing solenoid valve 14 in the solo brake system, and the second on-off solenoid valve 12 and the second pressure-releasing solenoid valve 15 in the backup brake system, are both in the pneumatic system. Therefore, in the case that the locomotive is under control of the solo brake system, the brake controller 6 is required to control the on or off states of the first on-off solenoid valve 10 and the first pressure-releasing solenoid valve 14. In the case that the locomotive is under control of the backup brake system, the brake controller 6 is required to control the on or off states of the second on-off solenoid valve 12 and the second pressure-releasing solenoid valve 15. To facilitate independent control, the brake controller 6 may be divided into two parts of secondary control units, and each part of a secondary control unit is provided with a pair of contacts that can be turned on or off. The pair of contacts may be denoted as S1 and S2. The two contacts S1 in the two parts of the secondary control units may be combined into a first control contact 601 specifically configured to control the on or off state of the first on-off solenoid valve 10 or the second on-off solenoid valve 12. Similarly, the two contacts S2 in the two parts of the secondary control units may be combined into a second control contact 602 specifically configured to control the on or off state of the first pressure-releasing solenoid valve 14 or the second pressure-releasing solenoid valve 15.

It is determined by the backup intermediate relay 21 whether the first control contact 601 controls the first on-off solenoid valve 10 or the second on-off solenoid valve 12, and whether the second control contact 602 controls the first pressure-releasing solenoid valve 14 or the second pressure-releasing solenoid valve 15. Generally, in a case that the backup intermediate relay 21 is not connected to the electro-interlock cut-out cock 5, namely, when the backup intermediate relay 21 is not powered, the backup intermediate relay 21 enables the first control contact 601 to be connected to the first on-off solenoid valve 10, and enable the second control contact 602 to be connected to the first pressure-releasing solenoid valve 14. That is, in the case that the backup intermediate relay 21 is not connected to the electro-interlock cut-out cock 5, the locomotive is at a state of being controlled by the solo brake system, and the first control contact 601 and the second control contact 602 of the brake controller 6 are configured to control the first on-off solenoid valve 10 and the first pressure-releasing solenoid valve 14 in the solo brake system, respectively. On the other hand, in a case that the backup intermediate relay 21 is connected to the electro-interlock cut-out cock 5, namely, when the backup intermediate relay 21 is powered, the backup intermediate relay 21 is configured to enable the first control contact 601 to be connected to the second on-off solenoid valve 12, and enable the second control contact 602 to be connected to the second pressure-releasing solenoid valve 15. That is, in the case that the backup intermediate relay 21 is connected to the electro-interlock cut-out cock 5, the locomotive is at a state of being controlled by the backup brake system, and the first control contact 601 and the second control contact 602 of the brake controller 6 are configured to control the second on-off solenoid valve 12 and the second pressure-releasing solenoid valve in the backup brake system, respectively.

In addition, the contacts S 1 and S2 themselves in the brake controller 6 are similar to switches that can be turned on or off, and on or off states of the contacts S1 and S2 are independent form each other and not affected by each other. The user may make selections at will among the on or off states of the contacts S1 and S2. In a specific embodiment, the brake controller 6 has three operation states. In a case that both the contact S1 and the contact S2 are turned on and powered, the brake controller 6 is at a braking operation state. In a case that both the contact S1 and the contact S2 are turned off and not powered, the brake controller 6 is at a brake-releasing operation state. In a case the S1 contact is turned on and powered and the S2 contact is turned off and not powered, the brake controller 6 is in a hold state. The three operations states of the brake controller 6 are embodied in the on or off states of the first on-off solenoid valve 10, the first pressure-releasing solenoid valve 14, the second on-off solenoid valve 12, and the second pressure-releasing solenoid valve 15. The on or off states in specific are apparent for those skilled in the art, and details are not described herein again.

In addition, it is considered that manual control on a braking pressure and brake releasing are necessary in the case that the locomotive is in the state of being controlled by the backup brake system. Thereby in one embodiment, an overcharge branch is added to the pneumatic system. Specifically, the overcharge branch includes an overcharge on-off solenoid valve 16, an overcharge pressure-releasing solenoid valve 18, an overcharge cylinder 17, and an overcharge switch 19 provided in the controlling circuit. An inlet port of the overcharge on-off solenoid valve 16 is in communication with the main pipe, and an outlet port of the overcharge on-off solenoid valve 16 is in communication with an air port of the overcharge reservoir 17. The inlet port of the overcharge pressure-releasing solenoid valve 18 is also in communication with the outlet port of overcharge on-off solenoid valve 16, and an outlet port of the overcharge pressure-releasing solenoid valve 18 is in communication with the outside air. The air port of the overcharge reservoir 17 is also in communication with an overcharge inlet of the relay valve 1. The overcharge switch 19 is mainly configured to control on or off states of the overcharge on-off solenoid valve 16 and the overcharge pressure-releasing solenoid valve 18. Generally, in a case that the overcharge switch 19 is turned on, the overcharge on-off solenoid valve 16 is turned on, the overcharge pressure-releasing solenoid valve 18 is turned off, and the air in the main pipe reaches the overcharge inlet port of the relay valve 1 via the overcharge pressure solenoid valve 16 and the overcharge reservoir 17. In such case, both the overcharge inlet port and the equalization inlet port of the relay valve 1 is provided with a certain pressure, and thereby a pressure in the train pipe can be increased by a proper extent, increasing the braking pressure. In a case that the overcharge switch 19 is turned off, the overcharge on-off solenoid valve 16 is turned off, and the overcharge pressure-releasing solenoid valve 18 is turned on. In such case, the air port of the overcharge reservoir 17 can be treated as being in communication with the outside air, and a pressure starts to be released. Hence, a pressure at the overcharge inlet port of the relay valve decreases gradually, thereby appropriately reducing the braking pressure, and preventing a situation of accidental releasing due to an excessive braking pressure. Thus, switching operation on the overcharge switch 19 is capable to increase or decrease the braking pressure correspondingly, facilitating adjusting the braking pressure of the locomotive.

A locomotive is further provided according to an embodiment. The locomotive includes a system for controlling dual-mode brake, and the system for controlling dual-mode brake is same as the aforementioned relevant content, which are not described again herein.

## Claims

1. A system for controlling a dual-mode brake for a locomotive, comprising a relay valve (1) in communication with a train pipe, and an pressure-equalizing device (2), of which one end is in communication with a main pipe and another end is in communication with an inlet port of the relay valve (1),
**characterized in that**
the system further comprises: a mode-switching valve (3) connected between the relay valve (1) and the pressure-equalizing device (2), a backup pressure regulating valve (4) in communication with the main pipe, an electro-interlock cut-out cock (5) in communication with an outlet port of the backup pressure regulating valve (4), and a brake controller (6);
wherein the mode-switching valve (3) is provided with a first inlet port, a second inlet port and an outlet port, the first inlet port of the mode-switching valve (3) is in communication with an outlet port of the pressure-equalizing device (2), the second inlet port of the mode-switching valve (3) is in communication with an outlet port of the electro-interlock cut-out cock (5), and the outlet port of the mode-switching valve (3) is in communication with an equalization inlet port of the relay valve (1); and
wherein the inlet port of the electro-interlock cut-out cock (5) and the outlet port of the electro-interlock cut-out cock (5) are in communication with each other in case of the electro-interlock cut-out cock (5) being triggered, and are cut out from each other in case of the electro-interlock cut-out cock (5) being not triggered;
wherein the brake controller (6) is configured to enable the outlet port of the mode-switching valve (3) to be in communication with the second inlet port of the mode-switching valve (3) in case of the electro-interlock cut-out cock (5) being triggered, and configured to enable the outlet port of the mode-switching valve (3) to be in communication with the first inlet port of the mode-switching valve (3) in case of the electro-interlock cut-out cock (5) being not triggered.

2. The system for controlling dual-mode brake according to claim 1, further comprising a distributing valve (7), a pressure comparison valve (8), an application valve (9), and a first on-off solenoid valve (10), a first stabilizing reservoir (11), a second on-off solenoid valve (12) and a second stabilizing reservoir (13);
wherein an inlet port of the distributing valve (7) is in communication with the train pipe, an outlet port of the distributing valve (7) is in communication with a first inlet port of the pressure comparison valve (8), an outlet port of the pressure comparison valve (8) is in communication with an inlet port of the application valve (9), and an outlet port of the application valve (9) is in communication with a brake cylinder pipe;
wherein an inlet port of the first on-off solenoid valve (10) is in communication with the main pipe, and an outlet port of the first on-off solenoid valve (10) and an air port of the first stabilizing reservoir (11) are both in communication with a second inlet port of the pressure comparison valve (8);
wherein an inlet port of the second on-off solenoid valve (12) is in communication with the outlet port of the backup pressure regulating valve (4), and an outlet port of the second on-off solenoid valve (12) and an air port of the second stabilizing reservoir (13) are simultaneously in communication with an inlet port of the electro-interlock cut-out cock (5);
wherein the first on-off solenoid valve (10) and the second on-off solenoid valve (12) are both signally connected to the brake controller (6); and
wherein the brake controller (6) is configured to control an on or off state of the second on-off solenoid valve (12) in case of the electro-interlock cut-out cock (5) being triggered, and configured to control an on or off state of the first on-off solenoid valve (10) in case of the electro-interlock cut-out cock (5) being not triggered.

3. The system for controlling dual-mode brake according to claim 2, further comprising:
a first pressure-releasing solenoid valve (14) in communication with the outlet port of the first on-off solenoid valve (10), and
a second pressure-releasing solenoid valve (15) in communication with the outlet port of the second on-off solenoid valve (12);
wherein an outlet port of the first pressure-releasing solenoid valve (14) and an outlet port of the second pressure-releasing solenoid valve (15) are both in communication with outside air;
wherein the first pressure-releasing solenoid valve (14) and the second pressure-releasing solenoid valve (15) are both signally connected to the brake controller (6); and
wherein the brake controller (6) is configured to control an on or off state of the second pressure-releasing solenoid valve (15) in case of the electro-interlock cut-out cock (5) being triggered, and configured to control an on or off state of the first pressure-releasing solenoid valve (14) in case of the electro-interlock cut-out cock (5) being not triggered.

4. The system for controlling dual-mode brake according to claim 3, further comprising:
an overcharge on-off solenoid valve (16) in communication with the main pipe,
an overcharge reservoir (17) and an overcharge pressure-releasing solenoid valve (18) that are in communication with an outlet port of the overcharge on-off solenoid valve (16), and
an overcharge switch (19) configured to control an on or off state of the overcharge on-off solenoid valve (16) and the overcharge pressure-releasing solenoid valve (18);
wherein an air port of the overcharge reservoir (17) is in communication with an overcharge inlet port of the relay valve (1), and an outlet port of the overcharge pressure-releasing solenoid valve (18) is in communication with the outside air;
wherein the inlet port of the overcharge on-off solenoid valve (16) and the outlet port of the overcharge on-off solenoid valve (16) are in communication with each other, and the inlet port of the overcharge pressure-releasing solenoid valve (18) and the outlet port of the overcharge pressure-releasing solenoid valve (18) are cut out from each other, in case of the overcharge switch (19) being turned on; and
wherein the inlet port of the overcharge on-off solenoid valve (16) and the outlet port of the overcharge on-off solenoid valve (16) are cut off from each other, and the inlet port of the overcharge pressure-releasing solenoid valve (18) and the outlet port of the overcharge pressure-releasing solenoid valve (18) are in communication with each other, in case of the overcharge switch (19) being turned off.

5. The system for controlling dual-mode brake according to claim 4, further comprising a mode control unit (20) and a backup intermediate relay (21) that are signally connected to the electrical interlock cut-out cock (5),
wherein the mode control unit (20) is configured to control communication among the inlet ports and the outlet port of the mode-switching valve (3);
wherein the backup intermediate relay (21) is configured to enable the brake controller (6) to select to control the on or off states of the first on-off solenoid valve (10) and the first pressure-releasing solenoid valve (14), or control the on or off states of the second on-off solenoid valve (12) and the second pressure-releasing solenoid valve (15);
wherein the mode control unit (20) is configured to enable the outlet port of the mode-switching valve (3) to be in communication with the second inlet port of the mode-switching valve (3) in case of the electro-interlock cut-out cock (5) being triggered, and enable the outlet port of the mode-switching valve (3) to be in communication with the first inlet port of the mode-switching valve (3) in case of the electro-interlock cut-out cock (5) being not triggered; and
wherein the backup intermediate relay (21) is configured to enable the brake controller (6) to control the on or off states of the first on-off solenoid valve (10) and the first pressure-releasing solenoid valve (14) in case of the electro-interlock cut-out cock (5) being triggered, and enable the brake controller (6) to control the on or off states of the second on-off solenoid valve (12) and the second pressure-releasing solenoid valve (15) in case of the electro-interlock cut-out cock (5) being not triggered.

6. The system for controlling dual-mode brake according to claim 5, wherein the brake controller (6) is provided with:
a first control contact (601) for controlling the on or off state of the first on-off solenoid valve (10) or the on or off state of the second on-off solenoid valve (12), and
a second control contact (602) for controlling the on or off state of the first pressure-releasing solenoid valve (14) or the on or off state of the second pressure-releasing solenoid valve (15),
wherein the first control contact (601) and the second control contact (602) are independent from each other in whether being triggered or not.

7. A locomotive, comprising the system for controlling dual-mode brake according to any one of claims 1 to 6.

## Patentansprüche

1. System zur Steuerung einer Dualmodus-Bremse für eine Lokomotive, umfassend ein mit einer Bremsleitung in Verbindung stehendes Relaisventil (1) sowie eine Druckausgleichseinrichtung (2), von der das eine Ende mit einer Hauptleitung und das andere Ende mit einer Eingangsöffnung des Relaisventils (1) in Verbindung steht,
**dadurch gekennzeichnet, dass**
das System ferner ein zwischen dem Relaisventil (1) und der Druckausgleichseinrichtung (2) verschaltetes modus-schaltendes Ventil (3), ein mit der Hauptleitung in Verbindung stehendes Backup-Druckregelungsventil (4), einen mit einer Ausgangsöffnung des Backup-Druckausgleichsregelgungsventils (4) in Verbindung stehenden Elektroverrieglungs-Absperrhahn (5) und eine Bremssteuerung (6) umfasst,
wobei das modus-schaltende Ventil (3) mit einer ersten Eingangsöffnung, einer zweiten Eingangsöffnung und einer Ausgangsöffnung versehen ist, wobei die erste Eingangsöffnung des modus-schaltenden Ventils (3) mit einer Ausgangsöffnung der Druckausgleichseinrichtung (2) in Verbindung steht, die zweite Eingangsöffnung des modus-schaltenden Ventils (3) mit einer Ausgangsöffnung des Elektroverriegelungs-Absperrhahns (5) in Verbindung steht und die Ausgangsöffnung des modus-schaltenden Ventils (3) mit einer Ausgleichseingangsöffnung des Relaisventils (1) in Verbindung steht, und
wobei die Eingangsöffnung des Elektroverriegelungs-Absperrhahns (5) und die Ausgangsöffnung des Elektroverriegelungs-Absperrhahns (5) im Falle des Auslösens des Elektroverriegelungs-Absperrhahns (5) miteinander in Verbindung stehen und im Falle des Nicht-Auslösens des Elektroverriegelungs-Absperrhahns (5) voneinander getrennt werden,
wobei die Bremssteuerung (6) eingerichtet ist, es zu ermöglichen, dass die Eingangsöffnung des modus-schaltenden Ventils (3) im Falle eines Auslösens des Elektroverriegelungs-Absperrhahns (5) mit der zweiten Eingangsöffnung des modus-schaltenden Ventils (3) in Verbindung steht und eingerichtet ist, es zu ermöglichen, dass die Ausgangsöffnung des modus-schaltenden Ventils (3) im Falle eines Nicht-Auslösens des Elektroverriegelungs-Absperrhahns (5) mit der ersten Eingangsöffnung des modus-schaltenden Ventils (3) in Verbindung steht.

2. System zur Steuerung einer Doppelmodus-Bremse nach Anspruch 1, ferner umfassend ein Verteilerventil (7), ein Druckabgleichsventil (8), ein Betätigungsventil (9) und ein erstes Ein/Aus-Magnetventil (10), ein erstes Stabilisierungsreservoir (11), ein zweites Ein/Aus-Magnetventil (12) und ein zweites Stabilisierungsreservoir (13),
wobei eine Eingangsöffnung des Verteilerventils (7) in Verbindung mit der Bremsleitung steht, eine Ausgangsöffnung des Verteilerventils (7) mit einer ersten Eingangsöffnung des Druckabgleichsventils (8) steht, eine Ausgangsöffnung des Druckabgleichsventils (8) mit einer Eingangsöffnung des Betätigungsventils (9) in Verbindung steht und eine Ausgangsöffnung des Betätigungsentils (9) mit einer Bremszylinderleitung in Verbindung steht,
wobei eine Eingangsöffnung des ersten Ein/Aus-Magnetventils (10) mit der Hauptleitung in Verbindung steht und eine Ausgangsöffnung des ersten Ein/Aus-Magnetventils (10) und eine Luftöffnung des ersten Stabilisierungsreservoirs (11) beide mit einer zweiten Eingangsöffnung des Druckabgleichsventils (6) in Verbindung stehen,
wobei eine Eingangsöffnung des zweiten Ein/Aus-Magnetventils (12) mit einer Ausgangsöffnung des Backup-Druckregulierungsventils (4) in Verbindung steht und eine Ausgangsöffnung des zweiten Ein/Aus-Magnetventils (12) und eine Luftöffnung des zweiten Stabilisierungsreservoirs (13) gleichzeitig mit einer Eingangsöffnung des Elektroverriegelungs-Absperrhahns (5) in Verbindung stehen,
wobei das erste Ein/Aus-Magnetventil (10) und das zweite Ein/Aus-Magnetventil (12) beide signalweise mit der Bremssteuerung (6) in Verbindung stehen und
wobei die Bremssteuerung (6) eingerichtet ist, einen Ein- bzw. Auszustand des zweiten Ein/Ausmagnetventils (12) im Falle eines Nicht-Auslösens des Elektroverriegelungs-Absperrhahns (5) zu steuern sowie eingerichtet ist, einen Ein- bzw. Auszustand des ersten Magnetventils (12) im Falle eines Nicht-Auslösens des Elektroverriegelungs-Absperrhahns (5) zu steuern.

3. System zur Steuerung einer Dualmodus-Bremse nach Anspruch 2, ferner umfassend
ein erstes mit der Ausgangsöffnnung des ersten Ein/Aus-Magnetventils (10) in Verbindung stehendes Druckentspannungs-Magnetventil (14) und
ein zweites mit der Ausgangsöffnung des zweiten Ein/Aus-Magnetventils (12) in Verbindung stehendes Druckentspannungs-Magnetventil (15),
wobei eine Ausgangsöffnung des ersten Druckentspannungs-Magnetventils (14) und eine Ausgangsöffnung des zweiten Druckentspannungs-Magnetventils (14) beide mit der Außenluft in Verbindung stehen,
wobei das erste Druckentspannungs-Magnetventil 14) und das zweite Druckentspannungs-Magnetventil (15) beide signalweise mit der Bremssteuerung (6) in Verbindung stehen und
wobei die Bremssteuerung (6) eingerichtet ist, einen Ein- bzw. Auszustand des zweiten Druckentspannungs-Magnetventils (15) im Falle eines Auslösens des Elektroverriegelungs-Absperrhahns (5) zu steuern sowie eingerichtet ist, einen Ein- bzw. Auszustand des ersten Druckentspannungs-Magnetventils (14) im Falle eines Nicht-Auslösens des Elektroverriegelungs-Absperrhahns (5) zu steuern.

4. System zur Steuerung einer Dualmodus-Bremse nach Anspruch 3, ferner umfassend
ein mit der Hauptleitung in Verbindung stehendes Überlast-Ein/Aus-Magnetventil (16),
ein Überlastreservoir (17) und ein Überlast-Druckentspannungs-Magnetventil (18), die mit einer Ausgangsöffnung des Überlast-Ein/Aus-Magnetventils (16) in Verbindung stehen und
einen zur Steuerung eines Ein/Aus-Zustands des Überlast-Ein-/Aus-Magnetventils (16) und des Überlast-Druckentspannungs-Magnetventils (18) eingerichteten Überlastschalter (19),
wobei eine Luftöffnung des Überlastreservoirs (17) mit einer Überlast-Einlassöffnung des Relaisventils (1) in Verbindung steht und eine Ausgangsöffnung des Überlast-Druckentspannungs-Magnetventils (18) mit der Außenluft in Verbindung steht,
wobei die Eingangsöffnung des Überlast-Ein/Aus-Magnetventils (16) und die Ausgangsöffnung des Überlast-Ein/Aus-Magnetventils (16) miteinander in Verbindung stehen und die Einlassöffnung des Überlast-Druckentspannungs-Magnetventils (18) und die Ausgangsöffnung des Überlast-Druckentspannungs-Magnetventils (18) voneinander abgetrennt sind, wenn der Überlastschalter (19) eingeschaltet wird und
wobei die Eingangsöffnung des Überlast-Ein/Aus-Magnetventils (16) und die Ausgangsöffnung des Überlast-Ein/Aus-Magnetventils (16) voneinander abgetrennt sind und die Einlassöffnung des Überlast-Druckentspannungs-Magnetventils (18) und die Ausgangsöffnung des Überlast-Druckentspannungs-Magnetventils (18) miteinander in Verbindung stehen, wenn der Überlastschalter (19) ausgeschaltet wird.

5. System zur Steuerung einer Dualmodus-Bremse nach Anspruch 4, ferner umfassend eine Modussteuerungseinheit (20) und ein Backup-Zwischenrelais (21), die signalweise mit dem Elektroverriegelungs-Absperrhahn (5) verbunden sind,
wobei die Modussteuerungseinheit (20) eingerichtet ist, die Kommunikation zwischen den Eingangsöffnungen und der Ausgangsöffnung des modus-schaltenden Ventils (3) zu steuern,
wobei das Backup-Zwischenrelais (21) eingerichtet ist, es der Bremssteuerung (6) zu ermöglichen, die Ein/Aus-Zustände des ersten Ein/Aus-Magnetventils (10) und des ersten Druckentspannungs-Magnetventils (14) zu steuern oder die Ein/Aus-Zustände des zweiten Ein/Aus-Magnetventils (12) und des zweiten Druckentspannungs-Magnetventils (16) zu steuern,
wobei die Modussteuerungseinheit (20) eingerichtet ist, es zu ermöglichen, dass die Ausgangsöffnung des modus-schaltenden Ventils (3) im Falle eines Auslösens des Elektroverriegelungs-Absperrhahns (5) mit dem zweiten Eingangsöffnung des modus-schaltenden Ventils (3) in Verbindung steht und eingerichtet ist, es zu ermöglichen, dass die Ausgangsöffnung des modus-schaltenden Ventils (3) im Falle eines Nicht-Auslösens des Elektroverriegelungs-Absperrhahns (5) mit der ersten Eingangsöffnung des modus-schaltenden Ventils (3) in Verbindung steht. und
wobei das Backup-Zwischenrelais (21) eingerichtet ist, es zu ermöglichen, dass die Bremssteuerung (6) die Ein- bzw. Auszustände des ersten Ein/Aus-Magnetventils (109 und des ersten Druckentspannungs-Magnetventils (14) im Falle des Auslösens des Elektroverriegelungs-Absperrhahns (5) steuert und es zu ermöglichen, dass die Bremssteuerung (6) die Ein/Aus-Zustände des zweiten Ein/Aus-Magnetventils (12) und des zweiten Druckentspannungs-Magnetventils (15) im Falle des Nicht-Auslösens des Elektroverriegelungs-Absperrhahns (5) steuert.

6. System zur Steuerung der Dualmodus-Bremse nach Anspruch 5, wobei die Bremssteuerung mit:
einem ersten Steuerungskontakt (601) zur Steuerung des Ein- bzw. Auszustands des ersten Ein/Aus-Magnetventils (10) oder des Ein- bzw. Aus-Zustands des zweiten Ein/Aus-Magnetventils (12) und
einem zweiten Steuerungskontakt (602) zur Steuerung des Ein- bzw. Auszustands des ersten Druckentspannungs-Magnetventils (14) oder des Ein- bzw. Aus-Zustands des zweiten Druckentspannungs-Magnetventils (15),
ausgestattet sind.
wobei der erste Steuerungskontakt (601) und der zweite Steuerungskontakt (602) im Falle eines Auslösens bzw. Nicht-Auslösens unabhängig voneinander sind,

7. Lokomotive, umfassend das System zur Steuerung der Dualmodus-Bremse nach einem der Ansprüche 1 bis 6.

## Revendications

1. Système de commande d'un frein à double mode pour une locomotive, comprenant une valve relais (1) en communication avec une conduite de frein, et un dispositif d'équilibrage de pression (2), dont une extrémité est en communication avec une conduite principale et une autre extrémité est en communication avec un orifice d'admission de la valve relais (1),
**caractérisé en ce que**
le système comprend en outre : une valve de commutation de mode (3) reliée entre la valve relais (1) et le dispositif d'équilibrage de pression (2), une valve de régulation de pression de secours (4) en communication avec la conduite principale, un robinet d'isolement à verrouillage électrique (5) en communication avec un orifice de sortie de la valve de régulation de pression de secours (4), et un appareil de commande de frein (6) ;
dans lequel la valve de commutation de mode (3) est pourvue d'un premier orifice d'admission, d'un second orifice d'admission et d'un orifice de sortie, le premier orifice d'admission de la valve de commutation de mode (3) est en communication avec un orifice de sortie du dispositif d'équilibrage de pression (2), le second orifice d'admission de la valve de commutation de mode (3) est en communication avec un orifice de sortie du robinet d'isolement à verrouillage électrique (5), et l'orifice de sortie de la valve de commutation de mode (3) est en communication avec un orifice d'admission d'équilibrage de la valve relais (1) ; et
dans lequel l'orifice d'admission du robinet d'isolement à verrouillage électrique (5) et l'orifice de sortie du robinet d'isolement à verrouillage électrique (5) sont en communication l'un avec l'autre dans le cas où le robinet d'isolement à verrouillage électrique (5) est déclenché, et sont coupés l'un de l'autre dans le cas où le robinet d'isolement à verrouillage électrique (5) n'est pas déclenché ;
dans lequel l'appareil de commande de frein (6) est configuré pour permettre à l'orifice de sortie de la valve de commutation de mode (3) d'être en communication avec le second orifice d'admission de la valve de commutation de mode (3) dans le cas où le robinet d'isolement à verrouillage électrique (5) est déclenché, et configuré pour permettre à l'orifice de sortie de la valve de commutation de mode (3) d'être en communication avec le premier orifice d'admission de la valve de commutation de mode (3) dans le cas où le robinet d'isolement à verrouillage électrique (5) n'est pas déclenché.

2. Système de commande de frein à double mode selon la revendication 1, comprenant en outre une valve de distribution (7), une valve de comparaison de pression (8), une valve d'application (9) et une première électrovalve marche-arrêt (10), un premier réservoir de stabilisation (11), une seconde électrovalve marche-arrêt (12) et un second réservoir de stabilisation (13) ;
dans lequel un orifice d'admission de la valve de distribution (7) est en communication avec la conduite de frein, un orifice de sortie de la valve de distribution (7) est en communication avec un premier orifice d'admission de la valve de comparaison de pression (8), un orifice de sortie de la valve de comparaison de pression (8) est en communication avec un orifice d'admission de la valve d'application (9) et un orifice de sortie de la valve d'application (9) est en communication avec une conduite de cylindre de frein ;
dans lequel un orifice d'admission de la première électrovalve marche-arrêt (10) est en communication avec la conduite principale, et un orifice de sortie de la première électrovalve marche-arrêt (10) et un orifice d'arrivée d'air du premier réservoir de stabilisation (11) sont tous les deux en communication avec un second orifice d'admission de la valve de comparaison de pression (8);
dans lequel un orifice d'admission de la seconde électrovalve marche-arrêt (12) est en communication avec l'orifice de sortie de la valve de régulation de pression de secours (4), et un orifice de sortie de la seconde électrovalve marche-arrêt (12) et un orifice d'arrivée d'air du second réservoir de stabilisation (13) sont simultanément en communication avec un orifice d'admission du robinet d'isolement à verrouillage électrique (5) ;
dans lequel la première électrovalve marche-arrêt (10) et la seconde électrovalve marche-arrêt (12) sont toutes les deux reliées par transmission de signaux à l'appareil de commande de frein (6) ; et
dans lequel l'appareil de commande de frein (6) est configuré pour commander un état de marche ou d'arrêt de la seconde électrovalve marche-arrêt (12) dans le cas où le robinet d'isolement à verrouillage électrique (5) est déclenché, et configuré pour commander un état de marche ou d'arrêt de la première électrovalve marche-arrêt (10) dans le cas où le robinet d'isolement à verrouillage électrique (5) n'est pas déclenché.

3. Système de commande de frein à double mode selon la revendication 2, comprenant en outre :
une première électrovalve de décharge de pression (14) en communication avec l'orifice de sortie de la première électrovalve marche-arrêt (10), et
une seconde électrovalve de décharge de pression (15) en communication avec l'orifice de sortie de la seconde électrovalve marche-arrêt (12) ;
dans lequel un orifice de sortie de la première électrovalve de décharge de pression (14) et un orifice de sortie de la seconde électrovalve de décharge de pression (15) sont tous les deux en communication avec l'air extérieur ;
dans lequel la première électrovalve de décharge de pression (14) et la seconde électrovalve de décharge de pression (15) sont toutes les deux reliées par transmission de signaux à l'appareil de commande de frein (6) ; et
dans lequel l'appareil de commande de frein (6) est configuré pour commander un état de marche ou d'arrêt de la seconde électrovalve de décharge de pression (15) dans le cas où le robinet d'isolement à verrouillage électrique (5) est déclenché, et configuré pour commander un état de marche ou d'arrêt de la première électrovalve de décharge de pression (14) dans le cas où le robinet d'isolement à verrouillage électrique (5) n'est pas déclenché.

4. Système de commande de frein à double mode selon la revendication 3, comprenant en outre :
une électrovalve marche-arrêt de surcharge (16) en communication avec la conduite principale,
un réservoir de surcharge (17) et une électrovalve de décharge de pression de surcharge (18) qui sont en communication avec un orifice de sortie de l'électrovalve marche-arrêt de surcharge (16), et
un interrupteur de surcharge (19) configuré pour commander un état de marche ou d'arrêt de l'électrovalve marche-arrêt de surcharge (16) et l'électrovalve de décharge de pression de surcharge (18) ;
dans lequel un orifice d'arrivée d'air du réservoir de surcharge (17) est en communication avec un orifice d'admission de surcharge de la valve relais (1), et un orifice de sortie de l'électrovalve de décharge de pression de surcharge (18) est en communication avec l'air extérieur ;
dans lequel l'orifice d'admission de l'électrovalve marche-arrêt de surcharge (16) et l'orifice de sortie de l'électrovalve marche-arrêt de surcharge (16) sont en communication l'un avec l'autre, et l'orifice d'admission de l'électrovalve de décharge de pression de surcharge (18) et l'orifice de sortie de l'électrovalve de décharge de pression de surcharge (18) sont coupés l'un de l'autre, dans le cas où l'interrupteur de surcharge (19) est activé ; et
dans lequel l'orifice d'admission de l'électrovalve marche-arrêt de surcharge (16) et l'orifice de sortie de l'électrovalve marche-arrêt de surcharge (16) sont coupés l'un de l'autre, et l'orifice d'admission de l'électrovalve de décharge de pression de surcharge (18) et l'orifice de sortie de l'électrovalve de décharge de pression de surcharge (18) sont en communication l'un avec l'autre, dans le cas où l'interrupteur de surcharge (19) est désactivé.

5. Système de commande de frein à double mode selon la revendication 4, comprenant en outre une unité de commande de mode (20) et un relais intermédiaire de secours (21) qui sont reliés par transmission de signaux au robinet d'isolement à verrouillage électrique (5),
dans lequel l'unité de commande de mode (20) est configurée pour commander la communication entre les orifices d'admission et l'orifice de sortie de la valve de commutation de mode (3) ;
dans lequel le relais intermédiaire de secours (21) est configuré pour permettre à l'appareil de commande de frein (6) de sélectionner entre la commande des états de marche ou d'arrêt de la première électrovalve marche-arrêt (10) et la première électrovalve de décharge de pression (14), ou la commande des états de marche ou d'arrêt de la seconde électrovalve marche-arrêt (12) et la seconde électrovalve de décharge de pression (15) ;
dans lequel l'unité de commande de mode (20) est configurée pour permettre à l'orifice de sortie de la valve de commutation de mode (3) d'être en communication avec le second orifice d'admission de la valve de commutation de mode (3) dans le cas où le robinet d'isolement à verrouillage électrique (5) est déclenché, et permettre à l'orifice de sortie de la valve de commutation de mode (3) d'être en communication avec le premier orifice d'admission de la valve de commutation de mode (3) dans le cas où le robinet d'isolement à verrouillage électrique (5) n'est pas déclenché ; et
dans lequel le relais intermédiaire de secours (21) est configuré pour permettre à l'appareil de commande de frein (6) de commander les états de marche ou d'arrêt de la première électrovalve marche-arrêt (10) et la première électrovalve de décharge de pression (14) dans le cas où le robinet d'isolement à verrouillage électrique (5) est déclenché, et permettre à l'appareil de commande de frein (6) de commander les états de marche ou d'arrêt de la seconde électrovalve marche-arrêt (12) et la seconde électrovalve de décharge de pression (15) dans le cas où le robinet d'isolement à verrouillage électrique (5) n'est pas déclenché.

6. Système de commande de frein à double mode selon la revendication 5, dans lequel l'appareil de commande de frein (6) est pourvu de :
un premier contact de commande (601) pour commander l'état de marche ou d'arrêt de la première électrovalve marche-arrêt (10) ou l'état de marche ou d'arrêt de la seconde électrovalve marche-arrêt (12), et
un second contact de commande (602) pour commander l'état de marche ou d'arrêt de la première électrovalve de décharge de pression (14) ou l'état de marche ou d'arrêt de la seconde électrovalve de décharge de pression (15),
dans lequel le premier contact de commande (601) et le second contact de commande (602) sont indépendants l'un de l'autre en ce qui concerne leur déclenchement ou non.

7. Locomotive, comprenant le système de commande de frein à double mode selon l'une quelconque des revendications 1 à 6.
